# EUROPEAN PATENT SPECIFICATION

(11) **EP 2 479 852 B1**
(45) Date of publication and mention of the grant of the patent: **13.08.2014**
(21) Application number: 11008111.4
(22) Date of filing: 06.10.2011
(51) Int. Cl.: H01R 43/18, H01R 4/34, H01R 9/24, F16B 37/04

(54) **Insulating plate, insulating plate manufacturing method and terminal block**
Isolierplatte, Verfahren zur Herstellung einer Isolierplatte und Anschlussleiste
Plaque d'isolation, procédé de fabrication de la plaque d'isolation et bloc terminal

(30) Priority: 20.01.2011 JP 2011010054
(43) Date of publication of application: 25.07.2012
(73) Proprietor: Sumitomo Wiring Systems, Ltd., Mie 510-8503 (JP)
(72) Inventor: Akuta, Daisuke, Yokkaichi-City Mie 510-8503 (JP)
(74) Representative: Müller-Boré & Partner Patentanwälte PartG mbB

(56) References cited:
- JP-A- 2008 098 007
- US-A- 5 795 117

## Description

The present invention relates to an insulating plate, an insulating plate manufacturing method and a terminal block.

Conventionally, a terminal block disclosed in Japanese Unexamined Patent Publication No. 2008-98007 is known as the one for electrically connecting conductors such as busbars extending from electrical devices such as a motor and an inverter. This terminal block electrically connects the conductors by placing the conductors of the respective electrical devices one above another on a terminal block main body including metal nuts inside by insert molding and fastening the conductors by tightening bolts and the nuts.

Since the electrical devices generally have high heat generation amounts and the conductors become hot, a metal heat sink is arranged below the nuts via an insulating member in the form of a flat plate made of synthetic resin and heat transferred from the conductors to the nuts is transferred to the heat sink via the insulating member and radiated from the heat sink in this terminal block.

When it is tried to form the insulating member with recesses capable of accommodating the nuts, a mold is provided with mold pins for forming these recesses. However, since a resin molded article such as the insulating member generally slightly contracts when being separated from the mold after being formed by the mold, it is difficult to demold the resin molded article due to the mold pins fitted in the recesses. Thus, the insulating member is separated from the mold by pushing the bottom surfaces of the recesses by a plurality of ejector pins. However, if this is done, slight indents caused by the ejector pins are left on the bottom surfaces of the recesses. If the nuts are accommodated into such recesses, air layers resulting from the indents caused by the ejector pins are formed between the lower surfaces of the nuts and the bottom surfaces of the recesses. Since these air layers have lower thermal conductivity than metals, synthetic resins and the like, heat is less transferred from the nuts to the heat sink to reduce heat radiation performance. Note that this phenomenon could similarly occur on a boundary surface between the insulating member and the heat sink.

The present invention was completed in view of the above situation and an object thereof is to improve heat radiation performance of a terminal block.

This object is solved according to the invention by the features of the independent claims. Preferred embodiments of the invention are subject of the dependent claims.

According to one aspect of the invention, there is provided an insulating plate made of synthetic resin for transferring heat transferred from at least one conductor extending from a device to at least one nut to a heat sink, comprising at least one nut accommodating recess for at least partly accommodating the (respective) nut, the nut accommodating recess including a bottom or base plate to be (particularly substantially vertically) sandwiched substantially in close contact between the nut and the heat sink and at least one surrounding wall (particularly substantially vertically) extending from the bottom plate to at least partly surround the side surface of the nut, the surrounding wall being provided with at least one pressing portion to be pressed by at least one (respective) ejector pin used to separate the nut accommodating recess fitted to a mold pin from the mold pin when the inner surface of the nut accommodating recess is formed, wherein the synthetic resin used for molding the insulating plate has a content of glass and talc of between about 50% and about 75%.

According to the thus constructed insulating plate, the nut accommodating recess can be separated from the mold pin by pressing the pressing portion provided not on the bottom plate to be held in close contact with the nut, but on the surrounding wall by the ejector pin when a mold for forming the insulating plate is opened to demold the insulating plate. Thus, no indent is formed on the bottom plate to be held in close contact with the nut and no air layer having lower thermal conductivity than metals, synthetic resins and the like is formed between the nut and the bottom plate. In this way, the nut and the bottom plate are held in close contact, whereby heat can more easily escape from the nut to the heat sink via the insulating plate and heat radiation performance of a terminal block can be improved.

The present invention is preferably embodied to have the following constructions.

A plurality of pressing portions may be intermittently formed on the surrounding wall.

According to this construction, a pressing force of the ejector pin can be distributed among the plurality of pressing portions when the nut accommodating recess is separated from the mold pin. This can prevent deformation of the insulating plate when the insulating plate is separated from the mold.

The pressing portion may be or may be provided on an end portion of the surrounding wall opposite to the bottom plate.

According to this construction, it is not necessary to separately provide the pressing portion on the surrounding wall and it is possible to make the insulating plate smaller and simplify the structure of the insulating plate.

One or more positioning ribs which substantially extend in a direction away from the bottom plate and/or can come into contact with the side surface(s) of the nut may be provided on the inner surface of the surrounding wall.

The one or more positioning ribs may be so formed as to reinforce the surrounding wall over the substantially entire height.

The inner peripheral shape of the surrounding wall may substantially conform to the outer peripheral shape of the nut.

A plurality of nuts may be be at least partly accommodated in a nut accommodating recess; and at least one partition wall may be provided between the nuts so that the nuts can be individually accommodated.

The partition wall may be set to be located higher than the conductors placed on the nuts,

A height of the partition wall may be set to be more than about 1.5 times the height of outer surrounding walls standing upward from the bottom plate of the nut accommodating recess.

The heat sink may be positioned with respect to a mold by at least partly inserting a positioning projection of the mold into a recess formed in the heat sink.

According to another aspect of the invention, there is provided a terminal block integrally formed by a molded resin part such that the insulating plate, the nut and the heat sink are respectively held in close contact.

According to such a terminal block, heat radiation performance of the terminal block can be improved since the nut and the insulating plate, the insulating plate and the heat sink are held in close contact with each other.

The present invention is preferably embodied to have the following constructions.

The nut may be positioned with respect to the insulating plate at the time of integral molding by at least partly accommodating the nut into the nut accommodating recess.

According to still a further aspect of the invention, three is provided a method for manufacturing an insulating plate made of synthetic resin and including at least one nut at least partly accommodating recess for accommodating at least one (respective) nut on which a conductor extending from a device is to be placed, wherein the nut accommodating recess includes a bottom or base plate to be held in close contact with the nut and at least one surrounding wall (particularly substantially vertically) extending or projecting from the bottom plate to at least partly surround the side surface of the nut; the nut accommodating recess is formed by a first mold for forming the inner surface of the nut accommodating recess and a second mold for forming the outer surface of the nut accommodating recess; and the nut accommodating recess is separated from the first mold by pressing at least one pressing portion provided on the surrounding wall by at least one ejector pin.

According to such a manufacturing method, the insulating plate can be formed without leaving any indent caused by the ejector pin on the bottom plate of the insulating plate.

The present invention is preferably embodied as follows:

A plurality of pressing portions may be intermittently formed on the surrounding wall are pressed by a plurality of ejector pins so that forces of the ejector pins are distributed among the plurality of pressing portions and/or the bottom plate of the insulating plate can be prevented from being deformed when the insulating plate is separated from the first mold.

The method for manufacturing an insulating plate may further comprise relatively positioning the heat sink with respect to a mold by at least partly inserting at least one positioning projection of the mold into at least one recess formed in the heat sink.

According to the above, it is possible to improve heat radiation performance of a terminal block.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view of a terminal block,
FIG. 2 is a plan view of the terminal block,
FIG. 3 is a rear view of the terminal block,
FIG. 4 is a bottom view of the terminal block,
FIG. 5 is a section along V-V of FIG. 2,
FIG. 6 is a section along VI-VI of FIG. 2,
FIG. 7 is a plan view of a nut,
FIG. 8 is a plan view of an insulating plate,
FIG. 9 is a rear view of the insulating plate,
FIG. 10 is a bottom view of the insulating plate,
FIG. 11 is a plan view of a heat sink,
FIG. 12 is a bottom view of the heat sink,
FIG. 13 is a side view showing a state before the nuts, the insulating plate and the heat sink are assembled,
FIG. 14 is a plan view showing a state after the nuts, the insulating plate and the heat sink are assembled,
FIG. 15 is a section along XV-XV of FIG. 14,
FIG. 16 is a section showing a state where a terminal block is molded in first and second block molds,
FIG. 17 is a perspective view with a section showing a state where the insulating plate is separated from first and second molds,
FIG. 18 is a section showing a state where nut accommodating recesses are fitted to the first mold, and
FIG. 19 is a section showing the insulating plate is separated from the first mold.

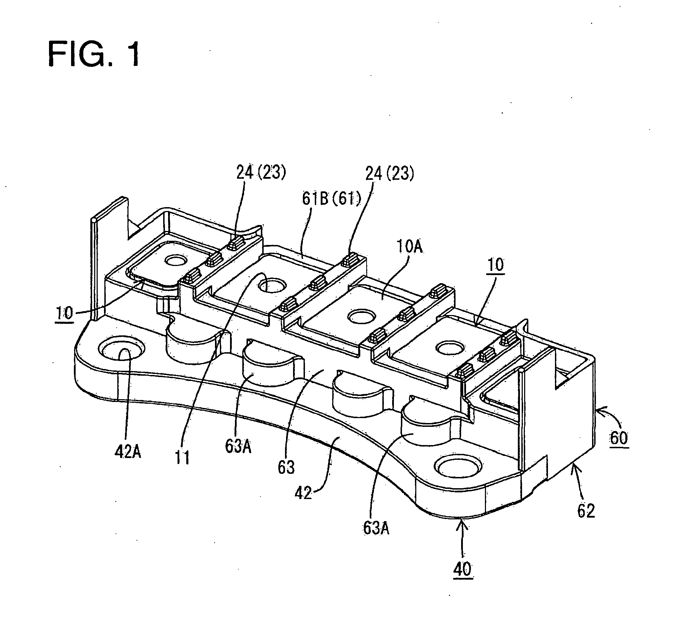

One particular embodiment of the present invention is described with reference to FIGS. 1 to 19.

In this embodiment is illustrated a terminal block which is to be mounted in a motor case to be installed in a vehicle such as an electric vehicle or a hybrid vehicle and is provided to electrically connect a busbar of a first electric equipment such as a electric motor (e.g. a three-pole busbar provided in a three-phase alternating current motor) and a busbar of a second electric equipment such as an inverter (e.g. a three-pole busbar provided in an inverter).

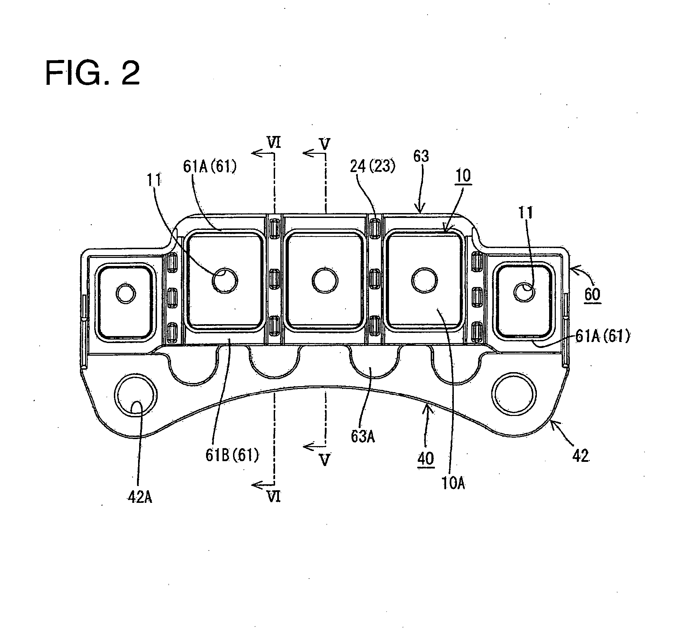

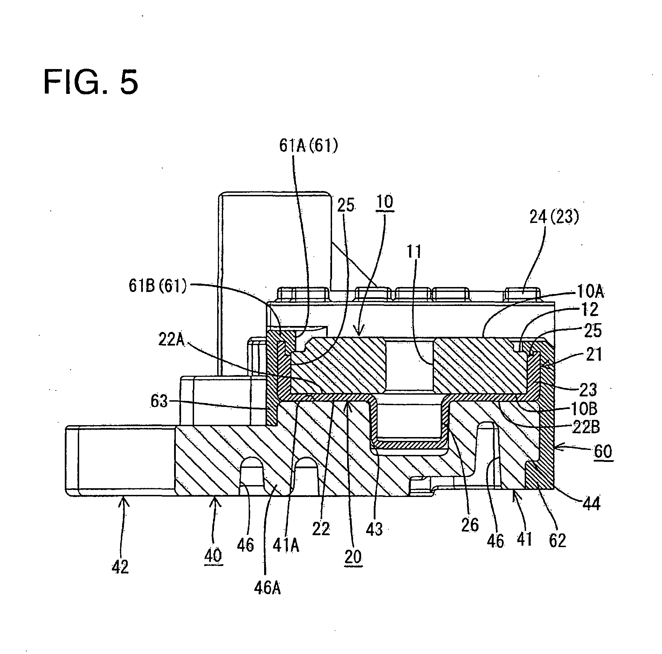

The terminal block includes one or more nuts 10 on which unillustrated busbars extending from electrical devices are to be placed, at least one heat sink 40 arranged adjacent to the nut(s) 10, particularly below the lower surfaces of the nuts 10 substantially opposite to the upper surfaces on which the busbars are to be placed, at least one insulating plate or element 20 vertically sandwiched between the nuts 10 and the heat sink 40 and at least one molded resin part 60 made e.g. of synthetic resin and at least partly covering these three members 10, 40 and 20. In the following description, a vertical direction is based on a vertical direction in FIG. 5 and a lateral direction is based on a lateral direction in FIG. 2.

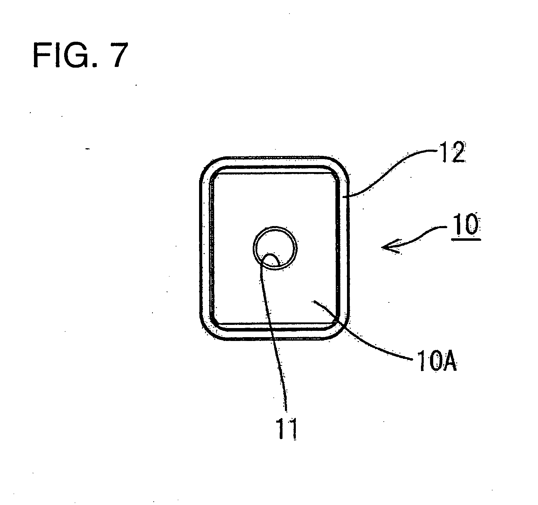

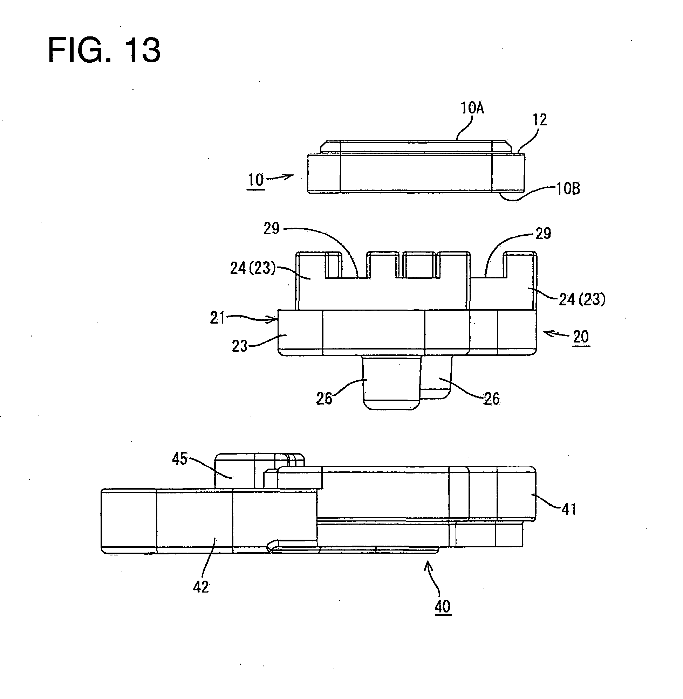

Each nut 10 particularly substantially is in the form of a metal block and, as shown in FIGS. 7 and 13, has a substantially rectangular or polygonal plan view with (e.g. four) rounded corners. A bolt tightening hole 11 penetrating in a vertical direction (direction at an angle different from 0° or 180°, preferably substantially perpendicular to both fastening surfaces 10A, 10B) is provided substantially in a central part of the nut 10. After a plurality of unillustrated busbars are to be placed on the upper fastening surface 10A of the nut 10, an unillustrated bolt is screwed to or into the bolt tightening hole 11 to electrically conductively connect the busbars.

A stepped or lowered portion 12 at least partly is formed on the outer peripheral edge of an upper end portion of the nut 10. This stepped or lowered portion 12 is formed to be slightly lower than the upper fastening surface 10A of the nut 10 as shown in FIG. 5. The stepped portion 12 particularly substantially is provided over the entire outer peripheral edge of the nut 10 and/or parallel to the upper and/or lower fastening surfaces 10A, 10B of the nut 10. Note that the upper and lower fastening surfaces 10A, 10B and the stepped portion 12 of the nut 10 particularly are flat without irregularity.

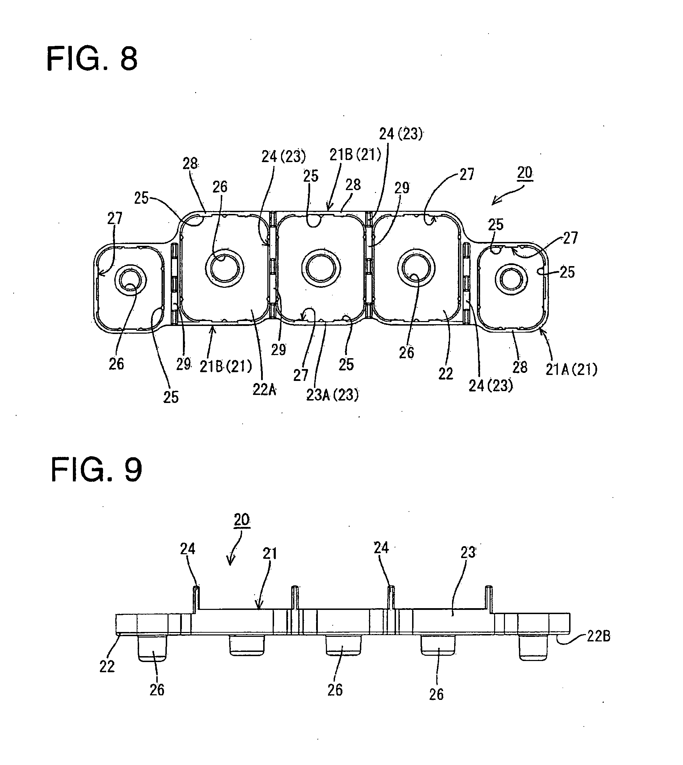

The insulating plate 20 is made of an insulating material such as synthetic resin and, as shown in FIG. 8, long in the lateral direction. This insulating plate 20 functions to transfer heat of the busbars placed on the nuts 10 from the nuts 10 to the heat sink 40 located below the nuts 10. Note that the synthetic resin used here particularly has a content of glass and talc between about 50% and 75% (e.g. of about 66 %) and/or thermal conductivity is higher than synthetic resin having a content of glass and talc of about 33 %. This enables heat to be efficiently transferred from the nuts 10 to the heat sink 40.

The insulating plate 20 includes one or more, particularly a plurality of (five in this embodiment) nut accommodating recesses 21 capable of at least partly accommodating the respective nuts 10 and particularly substantially arranged side by side in the lateral direction.

As shown in FIG. 5, each nut accommodating recess 21 includes a bottom or base plate 22 with which the lower fastening surface 10B of the nut 10 can be substantially held or positioned in close contact, and a surrounding wall 23 standing upward or projecting from the bottom plate 22 to surround side surfaces of the nut 10 over at least part of the periphery, particularly over the substantially entire periphery. Accordingly, the nut accommodating recess 21 has an open upper end and this upper end opening has a rectangular or polygonal shape with (e.g. four) rounded corners. The respective nut accommodating recesses 21 particularly are so substantially formed side by side that longer sides thereof are adjacent to each other. Out of the nut accommodating recesses 21, those located at the opposite sides in the lateral direction particularly are smaller nut accommodating recesses 21 A and/or one size smaller than three larger nut accommodating recesses 21B located in a central or intermediate part.

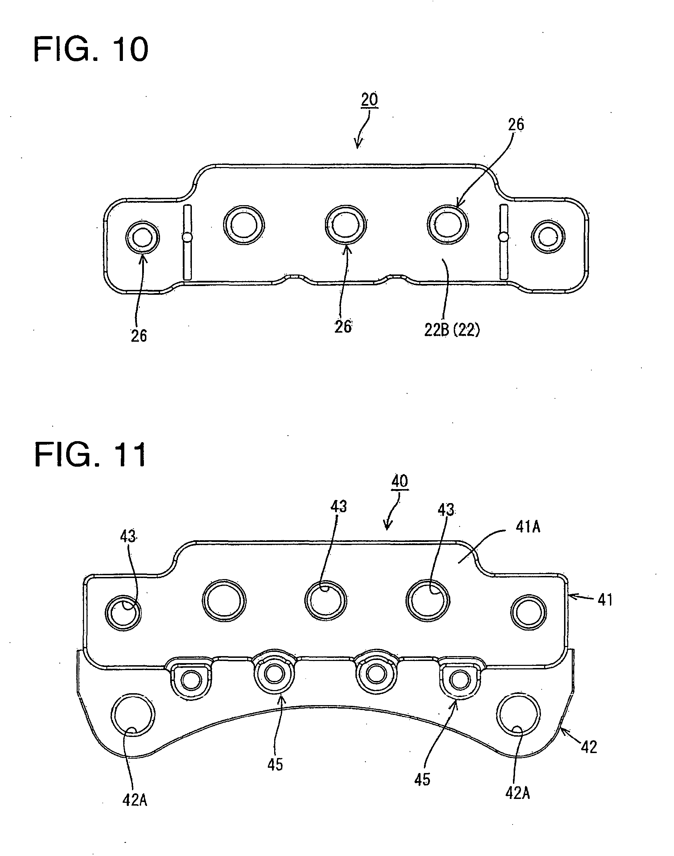

As shown in FIG. 10, particularly one unitary bottom plate 22 common to all the nut accommodating recesses 21 is provided, and both upper and lower surfaces 22A, 22B of the bottom plate 22 are formed to be flat. This enables the upper surface 22A of the bottom plate 22 in the respective nut accommodating recesses 21 and the lower fastening surfaces 10B of the nuts 10 to be closely held in contact without any clearances with the nuts 10 at least partly accommodated in the nut accommodating recesses 21 as shown in FIG. 5. In this way, heat can be efficiently transferred from the nuts 10 to the bottom plate 22.

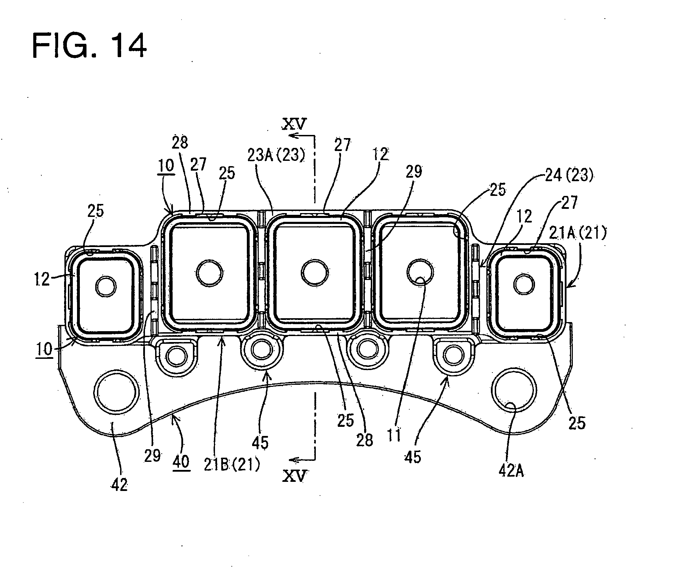

As shown in FIG. 8, the inner peripheral shapes of the surrounding walls 23 particularly have substantially rectangular or polygonal shapes and substantially conform to the outer peripheral shapes of the nuts 10. Further, the inner peripheral shapes of the surrounding walls 23 particularly are set to be slightly larger than the outer peripheral shapes of the nuts 10, and/or the nuts 10 particularly are to be at least partly accommodated with small clearances formed between the inner peripheral surfaces of the surrounding walls 23 and the side surfaces of the nut 10 in a state where the nuts 10 are accommodated in the nut accommodating recesses 21 as shown in FIG. 14. In this way, the respective nuts 10 are at least partly accommodated in the respective nut accommodating recesses 21 to be positioned.

Further, the surrounding wall 23 located between the adjacent nut accommodating recesses 21 particularly is the one common to the both nut accommodating recesses 21 and particularly serves as a partition wall 24 partitioning between the two nuts 10 accommodated in the both nut accommodating recesses 21. Further, out of the surrounding wall 23, a part other than the partition wall 24 particularly serves as an outer surrounding wall 23A. As shown in FIG. 9, the height of the partition wall 24 particularly is set to be about twice the height of the outer surrounding walls 23A to ensure a creepage distance between the two adjacent nuts 10. Since the partition wall(s) 24 is/are set to be located higher than the busbars placed on the upper fastening surfaces 10A of the nuts 10, the busbars particularly are prevented from coming into contact with each other to be short-circuited due to lateral movements of the busbars placed on the nuts 10.

Further, as shown in FIG. 8, one or more pressing projections 27 (particularly substantially having a rectangular or polygonal plan view) are formed to project from the respective inner peripheral surface(s) of the outer surrounding wall(s) 23A.

Particularly, one pressing projection 27 is provided on the inner peripheral surface of the (particularly each) shorter side of the surrounding wall 23 of the (particularly each) smaller nut accommodating recess 21A and/or one or more (e.g. two) pressing projections 27 are provided on the inner peripheral surface of the outer longer side of the surrounding wall 23 of the (particularly each) smaller nut accommodating recess 21A and/or the inner peripheral surface of the (particularly each) shorter side of the surrounding wall 23 of the (particularly each) larger nut accommodating recess 21 B while being spaced apart.

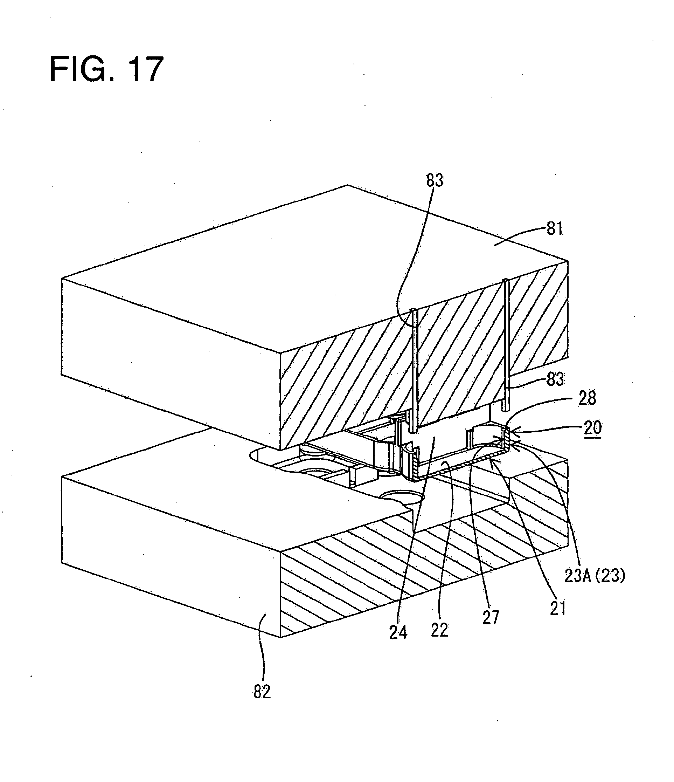

The pressing projection(s) 27 substantially vertically extend(s) and/or are formed over the substantially entire height of the outer surrounding wall(s) 23A. That is, the upper end or distal surfaces of the pressing projections 27 substantially are flush with those of the outer surrounding walls 23A as shown in FIG. 17. Further, the thickness of parts where the pressing projections 27 are provided particularly is larger than that of the other parts of the outer surrounding walls 23A by the thickness of the pressing projections 27.

At least one first pressing surface 28 is formed by or on the upper end or distal surface of each pressing projection 27 and/or that of the outer surrounding wall 23A substantially flush with and adjacent to the former upper end or distal surface. Note that, in the first pressing surface 28, the upper end or distal surface of the surrounding wall 23 and that of the pressing projection 27 particularly are set to have substantially the same area.

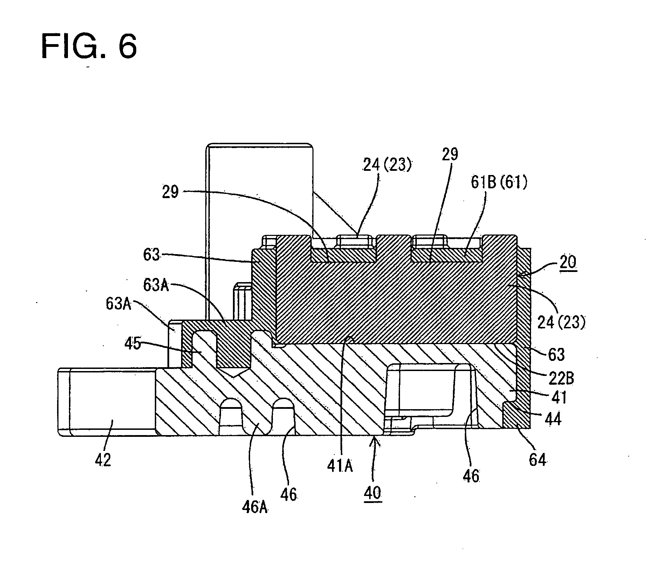

As shown in FIG. 8, one or more second pressing surfaces 29 (particularly substantially having a rectangular plan view) are formed on the upper end or distal surface(s) of the partition wall(s) 24. As shown in FIGS. 6 and 13, the one or more second pressing surfaces 29 are formed by recessing the partition wall(s) 24, particularly the substantially opposite sides of a center of an upper end portion of each partition wall 24 in a long side direction. Note that the first pressing surfaces 28 and/or the second pressing surface(s) 29 correspond to a particular pressing portion.

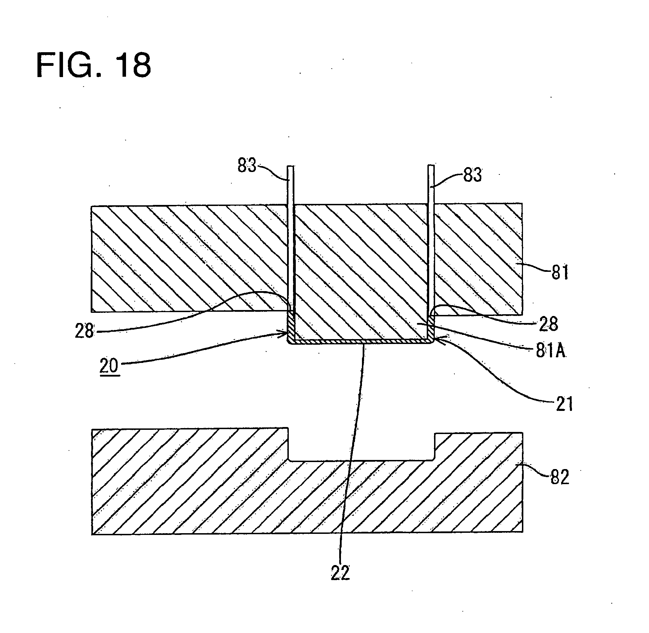

Further, as shown in FIGS. 17 and 18, the first and second pressing surfaces 28, 29 are surfaces to be pressed by one or more respective ejector pins 83 provided in one or more respective molds 81, 82 when the insulating plate 20 is separated from the molds 81, 82 after being formed by the molds 81, 82 that are vertically or relatively moved or displaced for molding opening. Specifically, the insulating plate 20 is formed by the first mold 81 arranged at one side (e.g. an upper side) and the second mold 82 arranged at another side (e.g. a lower side). The first mold 81 forms a first side (e.g. an upper surface side) of the insulating plate 20 and the second mold 82 forms a second side (e.g. a lower surface side) of the insulating plate 20. The insulating plate 20 is formed by at least partly injecting synthetic resin into a cavity formed by the first and second molds 81, 82, and completed by being separated from the first and second molds 81, 82 after this synthetic resin is cured.

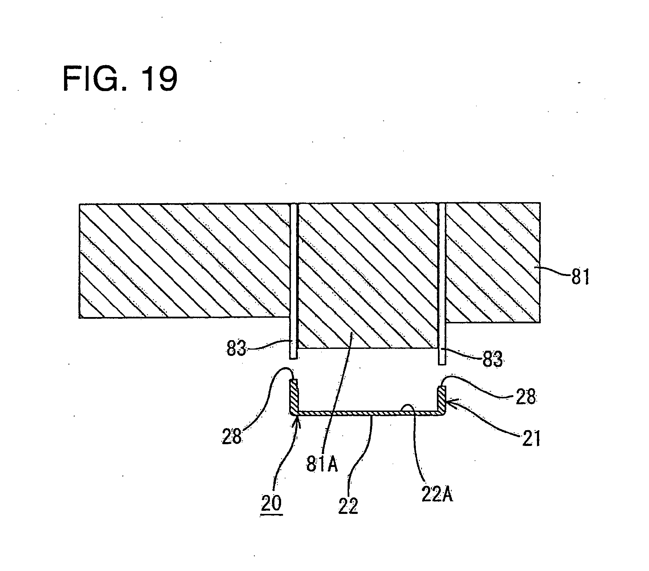

The one or more nut accommodating recesses 21 of the insulating plate 20 are formed by one or more accommodating-portion forming parts (as a particular example of a "mold pin") 81 A provided in the first mold 81 and, when being cooled and cured, slightly contract and/or are at least partly fitted to the accommodating-portion forming parts 81A as shown in FIG. 18, wherefore it is difficult to demold the nut accommodating recesses 21. Thus, the one or more ejector pins 83 provided in the first mold 81 press the respective first and second pressing surfaces 28, 29, whereby the one or more nut accommodating recesses 21 are separated from the accommodating-portion forming parts 81A and the insulating plate 20 is separated from the first mold 81 as shown in FIGS. 17 and 19. In this way, the insulating plate 20 is separated from the first mold 81 by pressing the first and second pressing surfaces 28, 29 instead of the bottom plate 22, and is formed without leaving any indents caused by the ejector pins on the surface of the bottom plate 22. This can prevent air layers having lower thermal conductivity than metals, synthetic resins and the like from being formed between the nuts 10 and the bottom plates 22. Since the insulating plate 20 of this embodiment can be held in close contact with the nuts 10 and the bottom plate 22 in this way, heat transference from the nuts 10 to the insulating plate 20 can be improved.

Since particularly a plurality of first and second pressing surfaces 28, 29 are intermittently formed on the surrounding wall 23, forces of the ejector pins 83 are distributed among the plurality of first and second pressing surfaces 28, 29 and the bottom plate 22 of the insulating plate 20 can be prevented from being deformed when the insulating plate 20 is separated from the first mold 81.

Further, since the one or more first and second pressing surfaces 28, 29 are formed on respective parts of the upper end or distal surfaces of the surrounding walls 23 and/or those of the partition walls 24, it is not necessary to separately form pressing surfaces on the insulating plate 20 and it is possible to make the insulating plate 20 smaller and simplify the structure of the insulating plate 20.

Furthermore, since the synthetic resin used for the insulating plate 20 particularly has a content of glass and talc of between about 50% and about 75% (e.g. about 66 %), warping is more unlikely to occur after molding as compared to synthetic resin having a content of glass and talc of about 33 %. This enables the bottom plate 22 of the insulating plate 20 to be more closely held in contact with the nuts 20 and heat transference from the nuts 10 to the bottom plate 22 to be further improved.

One or more positioning ribs 25 projecting inwardly of the nut accommodating recess 21 are provided on the inner peripheral surface of the surrounding wall 23. These positioning ribs 25 substantially vertically extend straight and are formed substantially over the entire height of the outer surrounding walls 23A. The positioning ribs 25 provided on the partition wall 24 particularly are set to extend up to a substantially vertical central of the partition wall 24. Further, the projecting ends of the positioning ribs 25 can come into contact with the side surfaces of the nut 10 accommodated in the nut accommodating recess 21.

As shown in FIG. 8, two positioning ribs 25 particularly are provided on the inner surface at the (particularly each of four) side(s) of the surrounding wall 23 in the (particularly each) smaller nut accommodating recess 21 A while being spaced apart. Further, two positioning ribs 25 particularly are provided on the inner surface of the (particularly each) longer side of the surrounding wall 23 in the (particularly each) larger nut accommodating recess 21 B while being spaced apart and/or three positioning ribs 25 particularly are provided on the inner surface of the (particularly each) shorter side thereof while being spaced apart. The positioning ribs 25 provided on the outer ones of the longer sides of the surrounding walls 23 in the smaller nut accommodating recesses 21 A particularly are formed on side surfaces of or adjacent to the pressing projections 27 (particularly the first and/or second pressing surfaces 28, 29), and/or those provided on the shorter sides of the surrounding walls 23 in the smaller nut accommodating recesses 21 A are formed on the pressing projections 27 (particularly the first and/or second pressing surfaces 28, 29) itself. Further, a part (e.g. two) of the positioning ribs 25 provided on each shorter side of the surrounding wall 23 in each larger nut accommodating recess 21B are formed on side surfaces of the pressing projections 27 (particularly the first and/or second pressing surfaces 28, 29). In this way, the nuts 10 accommodated in the nut accommodating recesses 21 are more accurately positioned by a plurality of positioning ribs 25 as shown in FIG. 14.

Further, a bolt escaping recess or hole 26 is formed in (particularly a substantially central part of) the bottom plate 22 at least partly enclosed by the surrounding wall 23. As shown in FIGS. 5 and 8, this bolt escaping recess 26 makes a circular opening in the upper surface 22A of the bottom plate 22 and projects downward. Further, the inner surface shape of the bolt escaping recess 26 particularly is a bottomed recess extending downward or outward from the upper surface 22A of the bottom plate 22. The bottom plate 22 and the bolt escaping recesses 26 particularly are formed to have a substantially uniform thickness. Accordingly, as shown in FIGS. 9 and 10, each bolt escaping recess 26 particularly substantially has a cylindrical outer surface shape projecting downward or outward from the lower surface 22B of the bottom plate 22.

As shown in FIG. 5, this bolt escaping recess 26 substantially is arranged coaxially with the bolt tightening hole 11 of the nut 10 and the inner diameter thereof is slightly larger than that of the bolt tightening hole 11. This can prevent the nut 10 from interfering with the bottom plate 22 of the insulating plate 20 and/or prevent the insulating plate 20 from being broken by the bolt even when the bolt is screwed into the nut 10 and inserted through the bolt tightening hole 11.

The heat sink 40 particularly is produced of a material having a higher heat capacity than the remaining parts of the terminal block such as aluminum die-cast and particularly substantially shaped to be laterally long as shown in FIG. 11. The heat sink 40 includes a sink main body 41 on which the insulating plate 20 is to be placed, and a fixing portion 42 integrally or unitarily formed to the sink main body 41. The sink main body 41 particularly substantially is laterally long and the fixing portion 42 is formed to project from one longer side edge of the sink main body 41.

The insulating plate 20 is to be placed on an upper surface 41 A of the sink main body 41. Further, the upper surface 41 A of the sink main body 41 is flat and/or polished to have no irregularities. This enables the lower surface 22B of the bottom plate 22 of the insulating plate 20 and the upper surface 41 A of the sink main body 41 to be held in close contact with the insulating plate 20 placed on the upper surface 41 A of the sink main body 41 as shown in FIG. 5.

Further, the sink main body 41 is formed with one or more (e.g. five) accommodation recesses 43 particularly arranged substantially at equal intervals in the lateral direction. The accommodation recesses 43 make (particularly substantially circular) openings in the upper surface 41 A of the sink main body 41 and are bottomed recesses extending downward or outward from the upper surface 41 A of the sink main body 41 as shown in FIG. 5. The accommodation recesses 43 are so formed that the bolt escaping recesses 26 of the insulating plate 20 at least partly are fittable or insertable thereinto. Further, the bolt escaping recesses 26 at least partly are or inserted fitted in the accommodation recesses 43 with small clearances formed between the outer surfaces of the bolt escaping recesses 26 and the inner peripheral surfaces of the accommodation recesses 43. This enables the insulating plate 20 and the heat sink 40 to be assembled while being positioned with respect to each other by fitting the respective bolt escaping recess(es) 26 of the insulating plate 20 into the corresponding accommodation recess(es) 43.

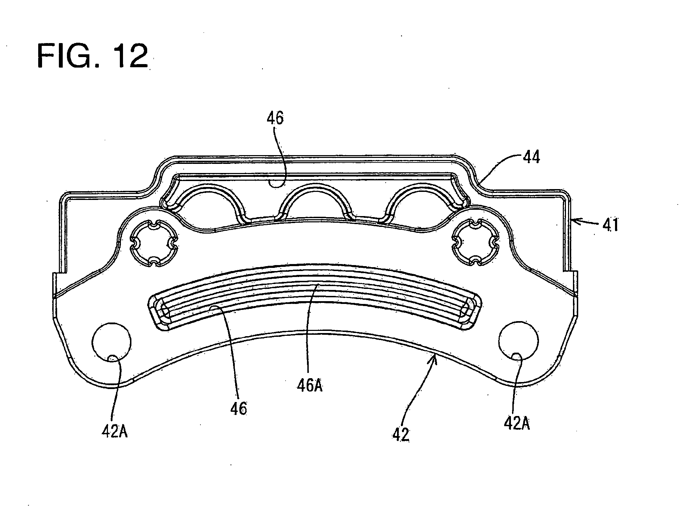

An outer edge stepped or lowered portion 44 formed somewhat above the lower surface of the sink main body 41 is formed at the outer peripheral edge of a lower end portion of the sink main body 41. As shown in FIG. 12, this outer edge stepped portion 44 is formed over at least part of the peripheral edge, particularly over the substantially entire outer peripheral edge except at a connected part of the sink main body 41 to the fixing portion 42.

The fixing portion 42 is formed to be laterally long along the side surface of the sink main body 41. Further, one or more vertically penetrating bolt insertion holes 42A are provided particularly at the substantially opposite lateral sides of the fixing portion 42. One or more (particularly substantially cylindrical) projections 45 (particularly having a substantially cylindrical shape) are provided to vertically extend from the upper surface of the fixing portion 42. As shown in FIG. 6, the cylindrical projections 45 are connected to the side surface of the sink main body 41 facing the fixing portion 42, and/or extend up to a position slightly above the upper surface 41 A of the sink main body 41. Further, each cylindrical projection 45 particularly is or comprises a bottomed recess with an open upper side.

As shown in FIG. 12, one or more recesses 46 are formed in the lower surfaces of the sink main body 41 and/or the fixing portion 42. Out of these recesses, at least one heat radiation fin 46A is formed in the recess of the fixing portion 42, and cooling water or fluid is or may be so circulated as to come into contact with this fin 46A. In this way, a heat radiation property from the heat sink 40 is improved by increasing the surface area of the lower surface of the heat sink 40 by the recess 46 and/or cooling the heat sink 40 by the heat radiation fin 46A.

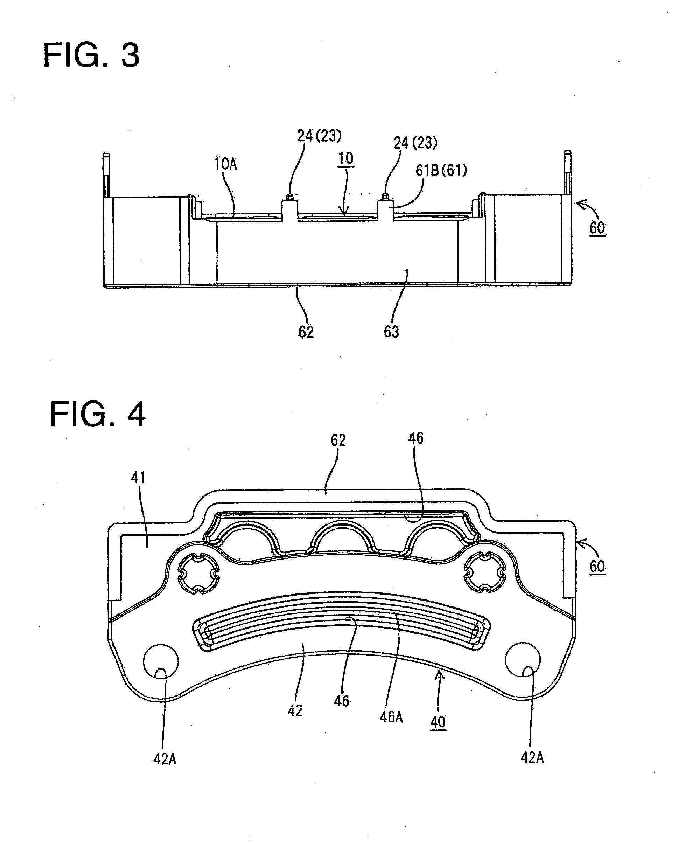

The molded resin part 60 is made e.g. of synthetic resin and, as shown in FIGS. 1 and 5, partly covers the nuts 10, the insulating plate 20 and the heat sink 40 with these assembled with each other. The molded resin part 60 includes an upper covering portion 61 to be held in close contact with the one or more stepped portions 12 of the one or more nuts 10 and/or the upper end portions of the surrounding walls 23 of the insulating plate 23, a lower fixing portion 62 to be held in close contact with the outer edge stepped portion 44 of the heat sink 40, and/or a side wall portion 63 to be held in close contact with the insulating plate 20 and the outer side surfaces of the sink main body 41 of the heat sink 40. Further, as shown in FIG. 3, the side wall portion 63 particularly is integrally or unitarily formed to the upper and lower covering portions 61, 62 so as to connect the upper and lower covering portions 61, 62.

As shown in FIG. 5, the upper covering portion 61 includes one or more nut covering portions 61 A at least partly covering the outer peripheral edges of the stepped portions 12 of the respective nuts 10 (particularly substantially over the entire peripheries) and/or one or more surrounding wall covering portions 61 B covering the upper end portions of the surrounding walls 23. Further, the surrounding wall covering portions 61 B are formed to at least partly cover the upper end portions of the respective surrounding walls 23 over the entire peripheries particularly except at parts of the partition walls 24. The respective nut covering portions 61 A and the respective surrounding wall covering portions 61 B are integrally or unitarily formed, and the upper covering portion 61 covers all the nuts 10 and surrounding walls 23. Note that the parts of the partition walls 24 particularly are exposed at the upper end surfaces of the surrounding wall covering portions 61 B.

As shown in FIGS. 4 and 5, the lower covering portion 62 is formed to at least partly cover the outer edge stepped portion 44 of the sink main body 41 of the heat sink 40 (particularly substantially over the entire range) from below. In this way, the molded resin part 60 is so formed as to vertically sandwich the nuts 10, the insulating plate 20 and the heat sink 40 and/or hold the respective members 10, 20 and 40 in close contact with each other as shown in FIGS. 5 and 6.

Further, the upper covering portion 61 particularly is so formed as to substantially fill up the clearances between the inner peripheral surfaces of the surrounding walls 23 of the nut accommodating recesses 21 and the side surfaces of the nuts 10, thereby improving a degree of adhesion between the molded resin part 60, the nuts 10 and the insulating plate 20.

As shown in FIGS. 3 and 5, the side wall portion 63 particularly is formed to entirely cover the side surfaces of the insulating plate 20 and/or the side surfaces of the sink main body 41 of the heat sink 40 between the upper covering portion 61 and the lower covering portion 62. As shown in FIG. 6, the side wall portion 63 is provided with one or more projection covering portions 63A which at least partly cover the cylindrical projections 45 of the heat sink 40. The projection covering portions 63A particularly are formed to fill up the interiors of the cylindrical projections 45 and entirely cover the upper surfaces and side surfaces of the cylindrical projections 45, thereby improving a degree of adhesion between the molded resin part 60 and the heat sink 40.

The terminal block of this embodiment is structured as described above. Next, a terminal block manufacturing method is described.

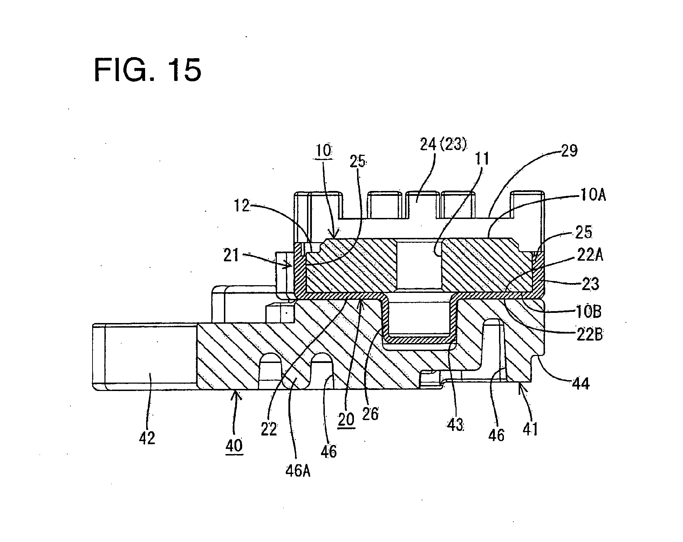

First, the one or more nuts 10 are at least partly accommodated in the respective one or more nut accommodating recesses 21 of the insulating plate 20 and the one or more bolt escaping recesses 26 of the nut accommodating recesses 21 at least partly are fitted into the respective one or more accommodation recesses 43 of the heat sink 40, whereby the nuts 10, the insulating plate 20 and the heat sink 40 are respectively assembled while being positioned as shown in FIGS. 14 and 15 and set in first and second block molds 71, 72 which substantially are vertically or relatively moved for mold opening. At this time, since the surface of the bottom plate 22 of the insulating plate 20 particularly is formed not to have even small irregularities, three kinds of members 10, 20, 40 can be so set in the first and second block molds 71, 72 that the lower fastening surfaces 10B of the nuts 10 and the upper surface 22A of the bottom plate 22, and the lower surface 22B of the bottom plate 22 and the upper surface 41A of the sink main body 41 of the heat sink 40 are held in close contact with each other.

Further, the stepped portions 12 of the nuts 10 are pressed over the entire peripheries from above by resin biting or engaging portions 73 provided in the first block mold 71 and the lower surface of the heat sink 40 is supported by the second block mold 72, whereby the bottom plate 22 of the insulating plate 20 at least partly can be (vertically) sandwiched between the lower fastening surfaces 10B of the nuts 10 and the upper surface 41 A of the sink main body 41 of the heat sink 40 to hold the one or more nuts 10, the heat sink 40 and the bottom plate 22 in close contact.

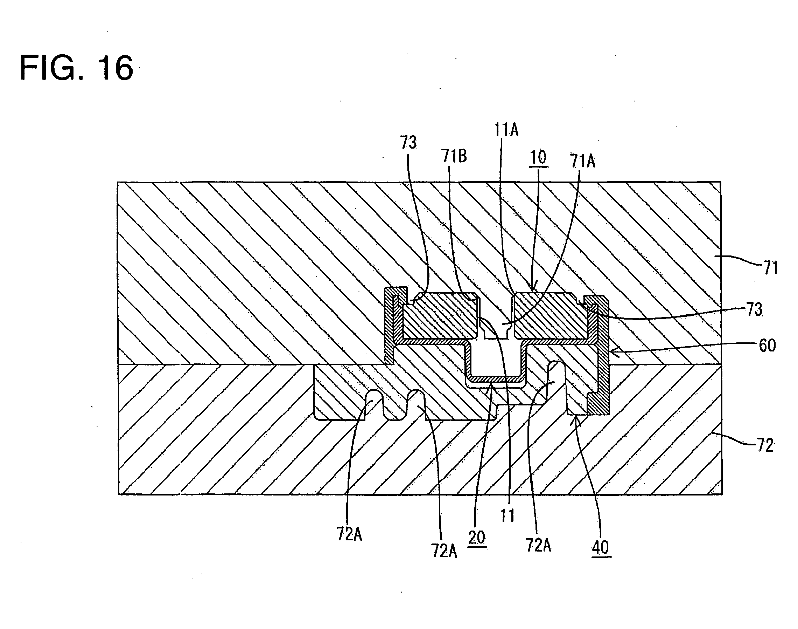

Further, since the nuts 10, the insulating plate 20 and the heat sink 40 are respectively positioned, they can be set in the first and second block molds 71, 72 without being displaced. At this time, the heat sink 40 is positioned in or with respect to the second block mold 72 by at least partly inserting a positioning projection 72A of the second block mold 72 into the recess 46 of the heat sink 40 as shown in FIG. 16. Further, since the insulating plate 20 particularly is positioned on the heat sink 40 and the nuts 10 are positioned on the insulating plate 20, it can be prevented that one or more positioning pins 71 A are largely displaced from the bolt tightening holes 11 to break the nuts 10 and/or the positioning pins 71 A when the positioning pins 71 A of the first block mold 71 are at least partly inserted into the bolt tightening holes 11 of the nuts 10 from above. Note that the one or more nuts 10 are to be at least partly accommodated in a slightly loose state in the nut accommodating portions or recesses 21 before being fixed by the positioning pins 71 A. When the first and second block molds 71, 72 are closed, slight relative displacements of the positioning pins 71A and the bolt tightening holes 11 of the nuts 10 are or can be corrected so that the nuts 10 are fixed to the positioning pins 71 A by locating taper surfaces 11 A provided at the upper inner peripheral edges of the bolt tightening holes 11 of the nuts 10 at inclined surfaces 71 B provide at the positioning pins 71 A as shown in FIG. 16.

Subsequently, in the above state, synthetic resin is injected into a cavity formed by the first and second block molds 71, 72 to form the molded resin part 60 as shown in FIG. 16. At this time, since the side surfaces of the nuts 10 can be held in contact only with the one or more positioning ribs 25 on the inner peripheral surface(s) of the surrounding walls 23 of the insulating plate 20, clearances are formed between the inner surface(s) of the surrounding wall(s) 23 and the side surface(s) of the nut(s) 10 and the synthetic resin can flow into these clearances. This can cause the nut(s) 10, the insulating plate 20 and the molded resin part 60 to be held in close contact, and can fix the nut(s) 10 and the insulating plate 20 without any chance of backlash.

Finally, the first and second block molds 71, 72 are vertically or relatively opened to complete the terminal block of this embodiment.

As described above, since the insulating plate 20 used in the terminal block according to this embodiment particularly is formed with the first and/or second pressing surfaces 28, 29 located or provided not on the bottom plate 22, but on the surrounding walls 23, it is possible to leave no indents caused by the ejector pins on the surface of the bottom plate 22 to be held in close contact with the nuts 10. This enables the nut(s) 10 and the bottom plate 22 to be held in close contact and heat to be efficiently transferred from the nut(s) 10 to the insulating plate 20. Consequently, heat radiation performance of the terminal block can be improved by efficiently transferring heat from the nut(s) 10 to the heat sink 40 via the insulating plate 20.

The molded resin part 60 particularly is formed with the one or more nuts 10, the insulating plate 20 and the heat sink 40 substantially held in close contact, and/or the nut(s) 10, the insulating plate 20 and the heat sink 40 are vertically sandwiched substantially in close contact by the upper covering portion 61 and the lower covering portion 62 of the molded resin part 60 in a state after molding. Thus, heat transference from the nut(s) 10 to the heat sink 40 can be further improved.

Further, the terminal block according to this embodiment particularly can be integrally or unitarily formed by the molded resin part 60 with the nuts 10 and the insulating plate 20, the insulating plate 20 and the heat sink 40 respectively positioned at correct positions. Thus, an insulating property between the nuts 10 and the heat sink 40 can be reliably ensured.

Accordingly, to improve heat radiation performance of a terminal block, an insulating plate 20 made of synthetic resin for transferring heat transferred from conductors to one or more nuts 10 to a heat sink 40 is provided with one or more nut accommodating recesses 21 for at least partly accommodating the one or more respective nuts 10. The (particularly each) nut accommodating recess 21 includes a bottom or base plate 22 to be sandwiched between the nut(s) 10 and the heat sink 40 and at least one surrounding wall 23 projecting or (particularly substantially vertically) extending from the bottom plate 22 to at least partly surround the side surface of the nut 10. The surrounding wall(s) 23 are provided with first and second pressing surfaces 28, 29 to be pressed by one or more respective ejector pins 83.

### <Other Embodiments>

The present invention is not limited to the above described and illustrated embodiment. For example, the following embodiments are also included in the technical scope of the present invention.
(1) Although the pressing portion is composed of the upper end surfaces of the surrounding walls 23 and those of the pressing projections 27 in this embodiment, the present invention is not limited to such a mode. For example, the pressing portion may be composed only of the upper end surfaces of the surrounding walls 23.
(2) Although the pressing portion is composed of the upper end surfaces of the surrounding walls 23 and the pressing projections 27 and those of the partition walls 24 in this embodiment, the present invention is not limited to such a mode. For example, the pressing portion may be composed of the bottom surfaces of the bolt escaping recesses 26.
(3) Although the pressing portion is composed of the upper end surfaces of the surrounding walls 23 and the pressing projections 27 and those of the partition walls 24 in this embodiment, the present invention is not limited to such a mode. The pressing portion may be composed of projections which are provided on outer peripheral parts of the nut accommodating recesses 21 and can be pressed by the ejector pins.

### LIST OF REFERENCE NUMERALS

- 10:: nut
- 20:: insulating plate
- 21:: nut accommodating recess
- 22:: bottom or base plate
- 23:: surrounding wall
- 28:: first pressing surface (pressing portion)
- 29:: second pressing surface (pressing portion)
- 40:: heat sink
- 60:: molded resin part
- 81:: first mold
- 81 A:: accommodating-portion forming part (mold pin)
- 82:: second mold
- 83:: ejector pin

## Claims

1. An insulating plate (20) made of synthetic resin for transferring heat transferred from at least one conductor extending from a device to at least one nut (10) to a heat sink (40), comprising at least one nut accommodating recess (21) for at least partly accommodating the nut (10), the nut accommodating recess (21) including a bottom plate (22) to be sandwiched in close contact between the nut (10) and the heat sink (40) and at least one surrounding wall (23) extending from the bottom plate (22) to at least partly surround the side surface of the nut (10), the surrounding wall (23) being provided with at least one pressing portion (28; 29) to be pressed by an ejector pin (83) used to separate the nut accommodating recess (21) fitted to a mold pin (81A) from the mold pin (81A) when the inner surface of the nut accommodating recess (21) is formed,
**characterized in that**
the synthetic resin used for molding the insulating plate (20) has a content of glass and talc of between about 50% and about 75%..

2. An insulating plate according to claim 1, wherein a plurality of pressing portions (28; 29) are intermittently formed on the surrounding wall (23).

3. An insulating plate according to any one of the preceding claims, wherein the pressing portion (28; 29) is provided on an end portion of the surrounding wall (23) opposite to the bottom plate (22).

4. An insulating plate according to any one of the preceding claims, wherein one or more positioning ribs (25) which substantially extend in a direction away from the bottom plate (22) and/or can come into contact with the side surface(s) of the nut (10) are provided on the inner surface of the surrounding wall (23).

5. An insulating plate according to claim 4, wherein the one or more positioning ribs (25) are so formed as to reinforce the surrounding wall (23) over the substantially entire height.

6. An insulating plate according to any one of the preceding claims, wherein the inner peripheral shape of the surrounding wall (23) substantially conforms to the outer peripheral shape of the nut (10).

7. An insulating plate according to any one of the preceding claims, wherein a plurality of nuts (10) can be at least partly accommodated in a nut accommodating recess (21); and at least one partition wall (24) is provided between the nuts (10) so that the nuts (10) can be individually accommodated.

8. An insulating plate according to claim 7, wherein the partition wall (24) is set to be located higher than the conductors placed on the nuts (10).

9. An insulating plate according to claim 7 or 8, wherein a height of the partition wall (24) is set to be more than about 1.5 times the height of outer surrounding walls (23A) standing upward from the bottom plate (22) of the nut accommodating recess (21).

10. A terminal block integrally formed by a molded resin part such that the insulating plate (20), the nut (10) and the heat sink (40) according to any one of the preceding claims are respectively held in close contact.

11. A method for manufacturing an insulating plate (20) made of synthetic resin and including at least one nut accommodating recess (21) for at least partly accommodating at least one nut (10) on which a conductor extending from a device is to be placed, wherein:
the nut accommodating recess (21) includes a bottom plate (22) to be held in close contact with the nut (10) and at least one surrounding wall (23) extending from the bottom plate (22) to at least partly surround the side surface of the nut (10);
the nut accommodating recess (21) is formed by a first mold (81) for forming the inner surface of the nut accommodating recess (21) and a second mold (82) for forming the outer surface of the nut accommodating recess (21); and
the nut accommodating recess (21) is separated from the first mold (81) by pressing at least one pressing portion (28; 29) provided on the surrounding wall (23) by at least one ejector pin (83).

12. A method for manufacturing an insulating plate (20) according to claim 11, wherein a plurality of pressing portions (28; 29) are intermittently formed on the surrounding wall (23) are pressed by a plurality of ejector pins (83) so that forces of the ejector pins (83) are distributed among the plurality of pressing portions (28; 29) and/or the bottom plate (22) of the insulating plate (20) can be prevented from being deformed when the insulating plate (20) is separated from the first mold (81).

13. The method of any one of the preceding claims 11 or 12, wherein the heat sink (40) is to be positioned with respect to a mold (72) by at least partly inserting a positioning projection (72A) of the mold (72) into a recess (46) formed in the heat sink (40).

14. A method of manufacturing a terminal block comprising the steps of any one of the preceding claims 11 to 13, wherein the terminal block is integrally formed by a molded resin part such that the insulating plate (20), the nut (10) and the heat sink (40) are respectively held in close contact and the nut (10) is positioned with respect to the insulating plate (20) at the time of integral molding by at least partly accommodating the nut (10) into the nut accommodating recess (21).

## Patentansprüche

1. Eine Isolierplatte (20), die aus einem Kunstharz hergestellt wird, um Wärme zu übertragen, die von mindestens einem Leiter, der von einer Vorrichtung zu mindestens einer Mutter (10) verläuft, zu einer Wärmesenke bzw. einem Kühlkörper (40) übertragen wird, die Folgendes umfasst: mindestens eine mutteraufnehmende Vertiefung (21) zur zumindest partiellen Aufnahme der Mutter (10), wobei die mutteraufnehmende Vertiefung (21) eine Bodenplatte (22) enthält, die in enger Verbindung zwischen der Mutter (10) und dem Kühlkörper (40) geschichtet wird, und mindestens eine umgebende Wand (23), die von der Bodenplatte (22) ausgeht, um zumindest teilweise die Seitenoberfläche der Mutter (10) zu umgeben, wobei die umgebende Wand (23) mit mindestens einem pressenden Abschnitt (28; 29) bereitgestellt wird, um von einem Auswerferstift (83) gepresst zu werden, der verwendet wird, um die an den geformten Stift (*mold pin*) (81A) angepasste mutteraufnehmende Vertiefung (21) vom geformten Stift (81A) zu trennen, wenn die Innenfläche der mutteraufnehmenden Vertiefung (21) geformt wird,
**dadurch gekennzeichnet, dass**
das für den Guss der Isolierplatte (20) verwendete Kunstharz einen Gehalt an Glas und Talkum aufweist, der zwischen etwa 50% und etwa 75% liegt.

2. Eine Isolierplatte nach Anspruch 1, wobei eine Vielzahl an pressenden Abschnitten (28; 29) intermittierend an der umgebenden Wand (23) gebildet wird.

3. Eine Isolierplatte nach irgendeinem der vorhergehenden Ansprüche, wobei der pressende Abschnitt (28; 29) an einem Endabschnitt der umgebenden Wand (23) bereitgestellt wird, der der Bodenplatte (22) gegenüberliegend ist.

4. Eine Isolierplatte nach irgendeinem der vorhergehenden Ansprüche, wobei eine oder mehrere Positionierungs-Rippen (25), die im Wesentlichen in einer Richtung verlaufen, die sich von der Bodenplatte (22) entfernt, und/oder die mit der bzw. den Seitenfläche(n) der Mutter (10) in Kontakt geraten können, an der Innenfläche der umgebenden Wand (23) bereitgestellt werden.

5. Eine Isolierplatte nach Anspruch 4, wobei die eine oder die mehreren Positionierungs-Rippen (25) derart gebildet werden, dass sie die umgebende Wand (23) im Wesentlichen über die ganze Höhe verstärken.

6. Eine Isolierplatte nach irgendeinem der vorhergehenden Ansprüche, wobei die innere Umfangsform der umgebenden Wand (23) im Wesentlichen der äußeren Umfangsform der Mutter (10) entspricht.

7. Eine Isolierplatte nach irgendeinem der vorhergehenden Ansprüche, wobei eine Vielzahl an Muttern (10) zumindest teilweise in einer mutteraufnehmenden Vertiefung (21) aufgenommen werden können; und wobei mindestens eine Trennwand (24) zwischen den Muttern (10) bereitgestellt wird, sodass die Muttern (10) individuell aufgenommen werden können.

8. Eine Isolierplatte nach Anspruch 7, wobei die Trennwand (24) so gesetzt wird, dass sie höher liegt als der auf den Muttern (10) angeordnete Leiter.

9. Eine Isolierplatte nach Anspruch 7 oder 8, wobei eine Höhe der Trennwand (24) derart gesetzt wird, dass sie 1,5-mal größer ist als die Höhe der äußeren umgebenden Wände (23A), wobei sie von der Bodenplatte (22) der mutteraufnehmenden Vertiefung (21) aus aufrecht steht.

10. Eine Klemmleiste, die integral durch ein Harz-Formteil derart gebildet wird, dass die Isolierplatte (20), die Mutter (10) und der Kühlkörper (40) nach irgendeinem der vorhergehenden Ansprüche jeweils in engem Kontakt gehalten werden.

11. Ein Verfahren zur Herstellung einer Isolierplatte (20), die aus Kunstharz hergestellt wird und mindestens eine mutteraufnehmende Vertiefung (21) zur zumindest partiellen Aufnahme mindestens einer Mutter (10) beinhaltet, auf der ein von einer Vorrichtung ausgehender Leiter zu platzieren ist, wobei:
die mutteraufnehmende Vertiefung (21) eine Bodenplatte (22) enthält, die in enger Verbindung zur Mutter (10) zu halten ist, und mindestens eine umgebende Wand (23), die von der Bodenplatte (22) ausgeht, um zumindest teilweise die Seitenoberfläche der Mutter (10) zu umgeben;
die mutteraufnehmende Vertiefung (21) durch eine erste Form (81) zur Bildung der Innenfläche der mutteraufnehmenden Vertiefung (21) gebildet wird, und durch eine zweite Form (82), zur Bildung der Außenfläche der mutteraufnehmenden Vertiefung (21); und
die mutteraufnehmende Vertiefung (21) von der ersten Form (81) getrennt wird durch Pressen von mindestens einem pressenden Abschnitt (28; 29), der an der umgebenden Wand (23) bereitgestellt wird, durch mindestens einen Auswerferstift (83).

12. Ein Verfahren zur Herstellung einer Isolierplatte (20) nach Anspruch 11, wobei eine Vielzahl an pressenden Abschnitten (28; 29), die intermittierend an der umgebenden Wand (23) gebildet werden von einer Vielzahl an Auswerferstiften (83) derart gepresst werden, dass Kräfte der Auswerferstifte (83) innerhalb der Vielzahl an pressenden Abschnitten (28; 29) verteilt werden und/oder dass die Bodenplatte (22) der Isolierplatte (20) daran gehindert werden kann, deformiert zu werden, wenn die Isolierplatte (20) von der ersten Form (81) getrennt wird.

13. Das Verfahren nach einem der vorhergehenden Ansprüche 11 oder 12, wobei der Kühlkörper (40) bezüglich einer Form (72) zu positionieren ist, indem teilweise ein Positionier-Vorsprung (72A) der Form (72) in eine im Kühlkörper (40) gebildete Vertiefung (46) eingeführt wird.

14. Ein Verfahren zur Herstellung einer Klemmleiste, der die Schritte nach irgendeinem der vorhergehenden Ansprüche von 11 bis 13 umfasst, wobei die Klemmleiste integral durch ein Harz-Formteil derart gebildet wird, dass die Isolierplatte (20), die Mutter (10) und der Kühlkörper (40) jeweils in engem Kontakt gehalten werden und dass die Mutter (10) in Bezug auf die Isolierplatte (20) zum Zeitpunkt des Integralgusses positioniert wird, indem die Mutter (10) zumindest teilweise in der mutteraufnehmenden Vertiefung (21) aufgenommen wird.

## Revendications

1. Une plaque d'isolation (20) composée de résine synthétique pour transférer de la chaleur transférée à partir d'au moins un conducteur, s'étendant à partir d'un dispositif à au moins un écrou (10), à un puits thermique (40), comprenant au moins un renfoncement de logement d'écrou (21) pour loger au moins partiellement l'écrou (10), le renfoncement de logement d'écrou (21) incluant une plaque de fond (22) à intercaler en contact étroit entre l'écrou (10) et le puits thermique (40), et au moins une paroi entourante (23) s'étendant à partir de la plaque de fond (22) pour entourer au moins partiellement la surface latérale de l'écrou (10), la paroi entourante (23) étant fournie avec au moins une partie de pression (28 ; 29) qui est à presser par une broche d'éjection (83) utilisée pour séparer le renfoncement de logement d'écrou (21) ajusté à une broche de coulée (81A) de la broche de coulée (81A) quand la surface intérieure du renfoncement de logement d'écrou (21) est formée,
**caractérisée en ce que**
la résine synthétique utilisée pour le moulage de la plaque d'isolation (20) présente une teneur en verre et talc entre approximativement 50% et approximativement 75%.

2. Une plaque d'isolation d'après la revendication 1, sachant qu'une pluralité de parties de pression (28 ; 29) sont constituées de façon intermittente sur la paroi entourante (23).

3. Une plaque d'isolation d'après une des revendications précédentes, sachant que la partie de pression (28 ; 29) est fournie sur une portion terminale de la paroi entourante (23) opposée à la plaque de fond (22).

4. Une plaque d'isolation d'après une des revendications précédentes, sachant qu'une ou plusieurs nervures d'alignement (25), qui s'étendent essentiellement dans une direction qui s'éloigne de la plaque de fond (22) et/ou qui peuvent entrer en contact avec la ou les surface(s) de l'écrou (10) sont fournies sur la surface intérieure de la paroi entourante (23).

5. Une plaque d'isolation d'après la revendication 4, sachant que la ou les nervures d'alignement (25) sont constituées de manière à renforcer la paroi entourante (23) essentiellement sur toute la hauteur.

6. Une plaque d'isolation d'après une des revendications précédentes, sachant que la forme périphérique intérieure de la paroi entourante (23) se conforme essentiellement à la forme périphérique extérieure de l'écrou (10).

7. Une plaque d'isolation d'après une des revendications précédentes, sachant qu'une pluralité d'écrous (10) peut être au moins partiellement logée dans un renfoncement de logement d'écrou (21) ; et qu'au moins une paroi de séparation (24) est fournie entre les écrous (10) de manière à ce que les écrous (10) peuvent être logés individuellement.

8. Une plaque d'isolation d'après la revendication 7, sachant que la paroi de séparation (24) est arrangée de manière à être située plus haut que les conducteurs placés sur les écrous (10).

9. Une plaque d'isolation d'après la revendication 7 ou 8, sachant qu'une hauteur de la paroi de séparation (24) est ajustée de manière à correspondre à plus de 1,5 fois la hauteur de parois entourantes extérieures (23A) en étant dressée vers le haut à partir de la plaque de fond (22) du renfoncement de logement d'écrou (21).

10. Un bloc de jonction intégralement constitué par une pièce moulée en résine de manière que la plaque d'isolation (20), l'écrou (10) et le puits thermique (40) d'après une des revendications précédentes soient respectivement gardés en contact étroit.

11. Un procédé de fabrication d'une plaque d'isolation (20) composée de résine synthétique et comprenant au moins un renfoncement de logement d'écrou (21) pour loger au moins partiellement au moins un écrou (10) sur lequel peut être placé un conducteur s'étendant à partir d'un dispositif, sachant que :
le renfoncement de logement d'écrou (21) inclue une plaque de fond (22) à garder en contact étroit avec l'écrou (10) et au moins une paroi entourante (23) s'étendant à partir de la plaque de fond (22) pour entourer au moins partiellement la surface latérale de l'écrou (10) ;
le renfoncement de logement d'écrou (21) est constitué par un premier moule (81) pour former la surface intérieure du renfoncement de logement d'écrou (21), et un deuxième moule (82) pour constituer la surface extérieure du renfoncement de logement d'écrou (21) ; et que
le renfoncement de logement d'écrou (21) est séparé du premier moule (81) en pressant au moins une partie de pression (28 ; 29) fournie sur la paroi entourante (23) par ou moins une broche d'éjection (83).

12. Un procédé de fabrication d'une plaque d'isolation (20) d'après la revendication 11, sachant qu'une pluralité de parties de pression (28 ; 29) constituées de façon intermittente sur la paroi entourante (23) sont pressées par une pluralité de broches d'éjection (83) de manière que des forces des broches d'éjection (83) soient distribuées parmi la pluralité de parties de pression (28 ; 29) et/ou de manière à empêcher que la plaque de fond (22) de la plaque d'isolation (20) soit déformée quand la plaquer d'isolation (20) est séparée du premier moule (81).

13. Le procédé d'après la revendication 11 ou 12, sachant que le puits thermique (40) est à positionner par rapport à un moule (72) en insérant au moins partiellement une saillie de positionnement (72A) du moule (72) dans un renfoncement (46) constitué dans le puits thermique (40).

14. Un procédé de fabrication d'un bloc de jonction comprenant les étapes d'après une des revendications de 11 à 13, sachant que le bloc de jonction est intégralement constitué par une pièce moulée en résine de manière que la plaque d'isolation (20), l'écrou (10) et le puits thermique (40) soient respectivement gardés en contact étroit et que l'écrou (10) soit positionné par rapport à la plaque d'isolation (20) au moment du moulage intégral en logeant au moins partiellement l'écrou (10) dans le renfoncement de logement d'écrou (21).
